# EUROPÄISCHE PATENTSCHRIFT

(11) **EP 1 496 189 B1**
(45) Veröffentlichungstag und Bekanntmachung des Hinweises auf die Patenterteilung: **24.12.2008**
(21) Anmeldenummer: 04450137.7
(22) Anmeldetag: 01.07.2004
(51) Int. Cl.: E06B 3/30, E06B 3/82, B29C 39/10, B27K 3/02, B29C 45/14

(54) **Verschlussorgan für Gebäudeöffnung sowie dessen Umrahmung und Verfahren zu dessen Herstellung**
Closure for a building opening, its frame and the manufacturing process therefor
Fermeture pour une baie d'un bâtiment ainsi que son encadrement et son procédé de fabrication

(30) Priorität: 07.07.2003 AT 10442003
(43) Veröffentlichungstag der Anmeldung: 12.01.2005
(73) Patentinhaber: Topic GmbH, 4152 Sarleitsbach (AT)
(72) Erfinder: Pilsl, Ernst, 4152 Sarleinsbach (AT)
(74) Vertreter: Wildhack, Helmut

(56) Entgegenhaltungen:
- WO-A-99/55511
- AU-A- 8 707 182
- DE-B- 1 119 503
- US-A- 2 630 395
- US-A- 4 712 765

## Beschreibung

Die Erfindung betrifft ein Verschlussorgan für die Gebäudeöffnungen und/oder die Rahmen bzw. Umrahmungen für dasselbe, insbesondere Türblätter, Fensterflügel, Klappen, Tür- und Fensterflügelrahmen, Fenster- und Türläden, Fensterbänke und/oder Stockrahmen für Türen und Fenster, gemäß dem **Oberbegriff** des **Anspruchs** 1. Sie betrifft weiters ein Verfahren zur Herstellung eines derartigen Verschlussorganes und/oder von dessen Rahmen bzw. Umrahmungen.

Im Besonderen bezieht sich die Erfindung auf die in Öffnungen der Wände von Bauwerken eingesetzten Tür- und Fenster-Stockrahmen mit jeweils entsprechend gestalteter und mit einer Oberflächenverkleidung aus Kunststoff versehenen Schauseite, wobei die Rückseite des Stockrahmens mit dem Material der Bauwerkswände, in den häufigsten Fällen also mit, Beton-, Mörtel- oder Ziegelmauerwerk, in Kontakt steht und dort dem Einfluss der dort herrschenden Bedingungen, insbesondere bezüglich Feuchtigkeit, ausgesetzt sind.

Es ist nun aus der AT 1388 U1 ein Verschlussorgan für Gebäudeöffnungen, insbesondere ein Türblatt, Fensterflügel bzw. Flügelrahmen und/oder Stockrahmen für Türen und Fenster, bekannt, welches aus einem Kern aus Holz, und aus einer diesen Kern teilweise umgebenden Deckschicht besteht, wobei dort die Deckschicht aus einer Verkleidung aus faserverstärktem, insbesondere glasfaserverstärktem, Kunststoff besteht.

In der Praxis hat sich gezeigt, dass es z.B. infolge der im Holz bzw. Holzmaterial des Kernes des in die Gebäudeöffnung eingesetzten (Stock-)Rahmens enthaltenen Feuchte und infolge der von demselben aus der Luft im Gebäude bzw. aus den die Öffnung umgebenden Bauwerksteilen in den Kern übergehenden Feuchtigkeit zur Ausbildung von Dampfbläschen zwischen dem Holzkern und der Kunststoff-Deckschicht kommt, die schließlich zu lokalen Abhebungen dieser Deckschicht führen und zumindest das Aussehen derselben beeinträchtigen.

Aus der DE 1119503 ist ein Verfahren zur Herstellung von mit gießbarem Kunststoff allseitig umhüllten Gegenständen, bei welchem ein Holzkern in eine dem herzustellenden Gegenstand entsprechende Hohlform eingelegt wird, wobei der Holzkern in eine mit Zu- und Ableitungen für die Kunststoffmasse versehene Hohlform eingebracht wird und sodann von der durch die Hohlform hindurchfließenden Kunststoffmasse vollständig umhüllt wird.

Wenn dort das Prinzip einer Ummantelung des Holzkerns mit einer Kunststoffmasse geoffenbart ist, so fehlen dort jegliche Angaben, auf welche Werte die Feuchte des Holzes reduziert werden muss und welche Kunststoffe in der Praxis für eine jahrzehntelange Haltbarkeit der Ummantelung des Holzkerns tatsächlich geeignet sind.

Aus der AU 87071/82 ist eine Ummantelung von Holzkernen mit Polyurethan bekannt geworden, allerdings ist dort eine vollständige Ummantelung keine Grundvoraussetzung.

Die vorliegende Erfindung beruht nun auf der Erkenntnis, dass mit einer neuen Beschichtungs-Technologie im Verbund mit einer präzisen Vorbereitung und Vorbehandlung des Holzes bzw. Holzmaterials des Kerns des Rahmens und dgl. der Einfluss von Raumluft- und Wandfeuchte auf das Verhalten der Kunststoffverkleidung bzw. -beschichtung in hohem Maß zurückgedrängt oder überhaupt ausgeschlossen werden kann.

Gegenstand der vorliegenden Erfindung ist somit ein Verschlussorgan bzw. dessen Umrahmung der eingangs genannten Art, welches bzw. die im **Kennzeichen** des Anspruchs 1 genannten **Merkmale** aufweist. ,

Bei den erfindungsgemäßen Verschlussorganen bzw. den dafür vorgesehenen Rahmenteilen u.dgl. wird die hohe Stabilität der neuen Kunststoffverkleidung dadurch erzielt, dass dem Holz sowohl die in demselben vorhandenen, bei schwankenden Temperaturen in ihrem Volumen stark schwankende Luft- bzw. Gaseinschlüsse sowie die Feuchtigkeit weitgehend entzogen sind. Durch die erfindungsgemäße Öl-Imprägnierung tritt an deren Stelle das Wasser bzw. Feuchte abweisende Imprägnier-Öl, wodurch ein die Kunststoff-Deckschicht und deren Haftung am Holzkern störendes Schrumpfen oder Schwellen des Holzes bzw. Holzmaterials vermieden ist.

Darüber hinaus wird dadurch, dass die Deck-Beschichtung durch Umgießen des Holzkerns erfolgt ist, ein äußerst intensiver und über die Gesamtoberfläche des Kerns porentief gleichmäßiger Adhäsionskontakt zwischen dem Kern und der ihm deckenden Kunststoffschicht erreicht, welcher wesentlich flächenhomogener ist, als dies bei der bisher bekannten Klebeverbindung von Kunststoff und Holzkern in Verschlussorganen der in Rede stehenden Art jemals der Fall sein konnte.

Wie aus dem Anspruch 1 hervorgeht, sind Kerne, deren Holz mit einem Öl biogener, d.h. üblicherweise pflanzlichen, Ursprungs imprägniert sind, besonders günstig. Im Rahmen der Erfindung ganz besonders bevorzugt findet jedoch - siehe **Anspruch** 2 - mit Teaköl imprägniertes Holz als Kernmaterial Einsatz.

Einen hohen Beitrag zur Stabilität und Dauerhaftigkeit des neuen Verschlussorgans und von dessen Umrahmungsteilen kann das gemäß **Anspruch 3** als Kern-Material vorteilhafterweise einzusetzende Hartholz beitragen, wobei vorzugsweise Teak- und Kambala-Holz Einsatz finden.

Was die Schicht aus dem durch Flüssig-Beschichten auf den Kern in Form einer denselben vollumfänglich umhüllenden Verkleidung aufgebrachten speziellen Kunststoff selbst betrifft, gibt dazu der **Anspruch** 4 näher Auskunft. Bei den dort angegebenen Schichtdicken ist hohe Verzugsfreiheit, Sicherheit vor dem Eindringen von Feuchtigkeit und Strapazfähigkeit der Verschlussorgane bzw. von deren Umrahmungen bzw. Umrahmungsbauteilen gewährleistet.

Gemäß **Anspruch 5** kann aus Gründen der Optik und noch weiter verbesserter Strapazfähigkeit ein Anstrich bzw. eine Lackierung der Außenseite der Kunststoff-Deckbeschichtung vorgesehen sein.

Einen weiteren wesentlichen Gegenstand der Erfindung stellt ein neues Verfahren zur Herstellung der erfindungsgemäßen Verschlussorgane und von deren Umrahmungen bzw. Rahmenteilen gemäß dem **Oberbegriff** des **Anspruchs 6** dar, welches die im kennzeichnenden Teil dieses Anspruchs angeführten Merkmale aufweist.

Als Umgießungsform für den Holz- bzw. Holzmaterial-Kem werden bevorzugt mehrteilige Formen aus Epoxyharz, vorzugsweise mit Trennmittel-Beschichtung ihrer Innenflächen eingesetzt, wozu auf den **Anspruch 7** hinzuweisen ist.

Was die Verfahrensführung beim Umgießen des Holzkerns anbelangt, hat es sich zur Verminderung des Gasgehaltes und auch der dem Holz innewohnenden Feuchte als günstig erwiesen, gemäß dem **Anspruch 8** vorzugehen, und in der Umgießungs-Form vor deren Füllung mit der Harzmischung einen Unterdruck von 0,7 bis 0,9 bar einzustellen.

Anhand des folgenden Beispiels wird die Erfindung näher erläutert:

### Beispiel:

Ein Kernmaterial, z.B. ein Türstockrahmen-Profil aus Kambala-Holz, dessen Feuchtigkeit z.B. durch Trocknen auf 8,5 % reduziert ist, um z.B. unerwünschte Schaumbildung am Übergang von Holz zur Polyurethan-Deckbeschichtung zu vermeiden, wird im Querschnitt rundum 5 mm kleiner als die gewünschte Geometrie des fertig beschichteten Profils gefräst, also "kalibriert".

Der so vorbereitete Holzkern wird in eine zweiteilige Epoxyharz-Form, die mit einem Polyurethan-Trennmittel behandelt und aufpoliert ist und in einen hydraulischen Formenträger eingebaut ist, eingespannt. Bei hohem Druck werden die Öffnungen der Umgießungs-Form mit konischen Dichtflächen und somit die Form luftdicht verschlossen.

Mit kleinen, in der Umgießungs-Form eingebauten Abstandhaltern wird der Holzkern in derselben mittig so zentriert gehalten, dass sich rundum ein Abstand von 5 mm zur Form-Innenwand ergibt.

Der gesamte Formenträger mit der Form wird mittels der Hydraulik in Längsrichtung ca. 5° schräg zur Horizontale gestellt.

An der tiefsten Stelle der Form befindet sich in deren Deckel-Schale eine sich konisch erweiternde Angussöffnung von 12 mm Durchmesser und an der nach Schrägstellung der Umgießungs-Form höchsten Stelle eine sich ebenfalls konisch erweiternde Entlüftungsöffnung. Über die Entlüftungsöffnung wird eine mit Dichtung versehene Vakuumglocke gestellt, die über einen Schlauch mit einer Vakuumpumpe verbunden ist, die Angussöffnung ist hierbei mit einem Stopfen verschlossen.

Nach dem Einschalten der Vakuumpumpe stellt sich ein Unterdruck von 0,7 bis 0,8 bar ein, der mindestens zwei Minuten auf den Holzkern einwirken gelassen wird, wodurch die Luft aus den Poren des Holzes herausgesaugt wird. Das ist vorteilhaft, denn, falls Restluft in den Poren der obersten Holzschicht verbleibt, kommt diese in Folge der Reaktionswärme, die beim Aushärten des Polyurethan-Harz-Gemisches entsteht, an die Oberfläche und das Profil bzw. dessen Beschichtung weist schließlich entsprechende Löcher bzw. Lunker auf.

Nach Ablauf der Evakuierzeit wird der Verschlussstopfen entfernt, und es wird das konisch zusammenlaufende Angussrohr einer Zwei-Komponenten-Dosieranlage angeschlossen, mittels welcher die beiden Komponenten des Polyurethan-Harzes in einem vorgegebenen Verhältnis miteinander vermischt werden.

Da bei diesem Vorgang kurzzeitig Luft in die Form eindringen kann, wird wieder kurz evakuiert und, wenn wieder ein Unterdruck von 0,7 bis 0,8 bar erreicht ist, wird die Vakuumpumpe abgeschaltet, und es wird mit dem Einströmen lassen des flüssige Polyurethanharz-Komponentengemisches in die Form begonnen.

Durch die leichte Schrägstellung der Umgießungs-Form kommt es zu einem gleichmäßigen Füllvorgang von unten nach oben. Bei Austritt des Harzgemisches an der Entlüftungsöffnung wird das Angussrohr abgenommen und das Angussloch wird wieder mit dem dortigen Stopfen verschlossen, um einen Rückfluss von Polymermaterial zu verhindern. Nach einer Aushärtezeit von etwa 10 min wird die Form hydraulisch geöffnet und mittels den an den beiden Enden der Form eingebauten Auswerfern wird das fertige, vollumfänglich mit Polyurethan-Harz beschichtete Türstock-Rahmenprofil aus der Umgießungsform herausgedrückt.

Die fertigen Profile werden dann mindestens 25 h gelagert, bevor sie einer weiteren Verarbeitung zugeführt werden.

Nachstehend sind einige Daten zu den günstigerweise einzusetzenden Polyurethanharzen angegeben:

| | | |
|---|---|---|
| Dichte (20°) | | 0,6 - 1,35 kg/dm³ |
| Shore - Härte | ISO 868 | D 70 - D 86 |
| Reißfestigkeit | ISO 527 - 3/1 B/100 | 18 - 48 N/mm² |
| Reißdehnung | ISO - " - | 2 - 40 % |
| Schlagzähigkeit | ISO 179/1e U | 14 - 65 kJ/mm² |
| Biege - E - Modul | ISO 78/2 | 550 - 3500 N/mm² |
| Biegefestigkeit | ISO 178/10 | 20 - 70 N/mm² |
| Reaktionstemperatur | | ca. 35 - 55° (ist stark abhängig von der Dicke der vergossenen Deck-Beschichtung) |

Ergänzend wird die Erfindung anhand der Zeichnung weiter näher erläutert:

Es zeigen die Fig. 1 eine Querschnittsansicht eines Türrahmenprofils gemäß dem durch die AT 1388 U1 gegebenen Stand der Technik, die Fig. 2 ein solches gemäß der Erfindung und die Fig. 3 ein Schema der für die Herstellung der neuen voll-ummantelten Holzkern-Bauteile günstigerweise einzusetzenden Harz-Umgießungsanlage.

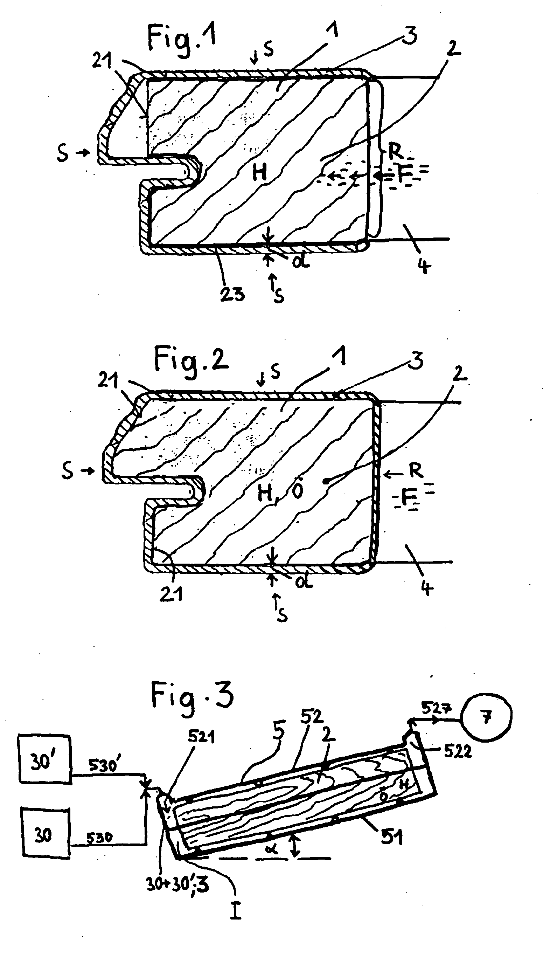

Die Fig. 1 zeigt einen Schnitt quer durch einen profilierten Türstockrahmen 1 mit einem Kern 2 aus massivem Holz H, Leimholz od.dgl. Hier ist der Holzkern 2 des Rahmens 1 auf allen sichtseitigen Flächen - insgesamt gekennzeichnet mit S - mit einer mittels Klebstoff oder Leim 23 flächig an ihn gebundenen, der Profilform des Rahmens 1 entsprechend gestalteten Kunststoffschale 3 gleichmäßiger Dicke d abgedeckt. Hingegen ist die an die Wand 4 eines Gebäudes anschließende Rückseite R des Stockrahmens 1 nicht beschichtet. Dort steht der Holzkern 2 in direktem Kontakt mit dem Material der Gebäudewand 4 und kann von dort Feuchtigkeit F aufnehmen, wodurch es zur Quellung des Holzkerns 2 und zu einem Absprengen der Kunststoffschale 3 kommen kann.

Bei dem erfindungsgemäßen, in der Fig. 2 ebenfalls in Querschnittsansicht gezeigten, Türstockrahmen 1 ist der Profil-Holzkern 2 vollumfänglich mit einer durch dessen in situ-Umgießung und somit porentief passgenau an die Profiloberfläche angepasst und an dieselbe ohne jegliche Klebung mit einem Fremd-Klebstoff oder durch Leimung gebundenen, kontinuierlich, sowohl die Sichtseite S als auch die Rückseite R bzw. die gesamte Oberfläche 21 deckenden Kunststoff-Deckbeschichtung 3 ummantelt. Durch diese Voll-Ummantelung mit der Kunststoff-Deckbeschichtung 3 ist ein Übergang von Feuchtigkeit F aus der Gebäudewand 4 in den Holzkern 2 völlig unterbunden. Darüber hinaus ist das Holz H des Kerns 2 vorteilhaft mit einem, günstigerweise harzigen, Öl Ö getränkt, womit ein weiterer Schutz gegen die Aufnahme von Feuchtigkeit und gegen Mikroorganismenbefall gegeben ist.

Aus der schematischen Darstellung einer Holzkern-Umgießungs-Anlage gemäß Fig. 3 ist ersichtlich, wie im Inneren einer eine Grundschale 51 und eine Deckschale 52 umfassenden, zweiteiligen Umgießungs-Form 5 der Holzkern 2 mittels Abstandhaltern rundum in gleichmäßigem, der gewünschten Dicke d der zu erzeugenden KunststoffUmmantelung entsprechenden Abstand von den Innenwandungsflächen der Umgießungsform 5 gehaltenist.

Die Gießform 5 ist in einem Winkel α von z.B. zwischen 5 und 10° zur Horizontale schräg gestellt. Deren Deckschale 52 weist an einer tiefsten Stelle eine Zulauföffnung 521 und an ihrer höchsten Stelle eine Abführungsöffnung 522 auf. Diese Abführungsöffnung 522 wird vor der eigentlichen Umgießung des Kerns 2 an eine Abführungsleitung 527 zu einer Vakuumpumpe 7 angeschlossen, mit deren Hilfe Luft bzw. andere Gase aus den Poren des Holzes des Kerns 2 abgesaugt werden.

Danach werden über an die Einlauföffnung 521 angeschlossene ZuführungsLeitungen 530, 530', die jeweils zur Bildung des Ummantelungs-Kunststoffes bzw. -Polymers 3 vorgesehenen Polymer-Komponenten 30 und 30' in das Innere I der Form 5 gefördert, und es steigt dort das letztlich die Ummantelung bildende Polymer-Komponenten-Gemisch in der Umgießungs-Form 5 von unten nach oben langsam auf, bis die obere Abführungsöffnung 522 erreicht ist.

Nach Ablauf der Polymer-Aushärtungszeit, z.B. 20 min, wird die Umgießungs-Form 5 geöffnet, und der mit der Polymer-Ummantelung 3 versehene Holzkern 2 wird ausgetragen und kann danach noch eventuell nachbearbeitet und/oder insbesondere mit einer Lackschicht versehen werden.

## Patentansprüche

1. Verschlussorgan für Gebäudeöffnungen und/oder Umrahmung für dasselbe, insbesondere Türblatt, Fenstrflügel, Klappe, Tür- und Fensterflügelrahmen, Fenster und Türladen, Fensterbank und/oder Stockrahmen für Türen und Fenster, umfassend einen, insbesondere profilierten, aus Holz, Verbundholz oder Holzmaterial gebildeten Kern und eine denselben umgebende Deckschicht, wobei dem Holz- bzw. Holzmaterial des Kerns die in demselben bzw. in dessen Poren ursprünglich enthaltene Luft bzw. Gase zumindest teilweise entzogen ist, bzw. sind und dessen Feuchtigkeitsgehalt auf einen Wert von unter 10% reduziert ist, und der Kern mit einer durch Umgießen, in einer seiner jeweiligen Querschnitts- bzw. Profilform entsprechenden Umgießungs-Form mit einem fließfähigen und in der Form aushärtenden Polymer (30, 30', 3) gebildeten, voll-umfänglich satt an dessen Oberfläche (21) anliegend mit ihm verbundenen Deckbeschichtung (3) ummantelt 15 ist, durch **gekennzeichnet**,
- dass J.falls der Gehalt des Holzes (H) an hydrophoben Öl unter 2 Gew-% beträgt, das Holz mit einem hydrophoben Öl, biogenen Ursprungs, zu einem Anteil von zumindest 2 bis maximal 5 Gew.-%, jeweils bezogen auf die Menge des Holzes, von dessen Oberfläche (21) her getränkt, bevorzugt mit demselben durchtränkt, ist, wobei die Deckbeschichtung mit einem Polyurethan-, Polyester- oder Acrylharz gebildet ist.

2. Verschlussorgan und/oder Umrahmung nach Anspruch 1, **dadurch gekennzeichnet, dass** das Holz (H) des Kerns (2) mit einem Pflanzen- bzw. Baumöl (Ö), insbesondere mit Teaköl, getränkt ist.

3. Verschlussorgan und/oder Umrahmung nach Anspruch 1 oder 2, **dadurch gekennzeichnet, dass** der Kern (2) mit Hartholz, insbesondere mit Teak- und/oder Kambala-Holz gebildet ist.

4. Verschlussorgan und/oder Umrahmung nach einem der Ansprüche 1 bis 3, **dadurch gekennzeichnet, dass** die, bevorzugterweise voll-umfänglich gleichmäßige, Dicke der Polymer- bzw. Kunstharz-Deckbeschichtung (3) des Kerns (2) 3 bis 7 mm, bevorzugt 5 ± 0,5 mm, beträgt.

5. Verschlussorgan und/oder Umrahmung nach einem der Ansprüche 1 bis 4, **dadurch gekennzeichnet, dass** die Kunstharz-Deckbeschichtung (3) des Kerns (2) an ihrer Außenseite mit einem Anstrich (301), bevorzugt mit einer Lackierung, versehen ist.

6. Verfahren zur Herstellung eines Verschlussorgans für Gebäudeöffnungen und/oder Umrahmungen für dasselbe nach einem der Ansprüche 1 bis 5, wobei die Feuchtigkeit des Holzmaterials des Kerns reduziert wird, wobei der Kern eventuell nach einer Nachbearbeitung zur jeweils vorgesehenen Querschnitts- bzw. Profil-Form bzw. -Dimension - In einer in ihrem Inneren der gewünschten End-Querschnitts- bzw. Profil-Form und -Dimension entsprechend gestalteten an ihrer tiefstliegenden Stelle oder an der tiefstliegenden Stelle ihres Deckels eine an zumindest eine Zuführungsleitung für die Schmelze eines Ausgangs-Polymer(-Gemisch)es angeschlossene bzw. anschließbare Zufuhröffnung und an ihrer höchstliegenden Stelle bzw. an der höchstliegenden Stelle ihres Deckels eine, an eine Abführungsleitung angeschlossene bzw. anschließbare, Abführungsöffnung aufweisende, zumindest zweiteiligen Umgießungs-Form mit nach allen Seiten hin gleichen Abständen zu deren Innenwandungsflächen hin positioniert wind, wobei danach Ober die Polymerschmelze-Zufuhröffnung das für die Deck-Beschichtung des Kerns vorgesehene Polymer- bzw. Polymerkomponentengemisch aufsteigend in die Umgießungs-Form eingebracht und aushärten gelassen wird, wonach
schließlich in einer fünften Stufe der so erhaltene, mit der Deck-Beschichtung aus dem ausgehärteten Polymer ummantelte Kern ausgeformt wird,
**dadurch gekennzeichet,**
- dass in einer ersten Stufe das Holz, Verbundholz bzw. Holzmaterial des Kerns durch Trocknung, oder Vakuum-Behandlung od.dgl. auf einen Feuchtigkeitsgehalt von 6 bis 8 Gew-% gebracht wird, wonach für den Fall, dass der Eigenöl-Gehalt des Holzes unter 2 % beträgt, der Kern durch Lagern in einem warmen Bad aus einem Holz-Tränköl; biogenen Ursprungs, bis zu einem Öl-Gehalt von 2 bis 5 Gew-% mit dem Öl getränkt wird,
- dass in einer zweiten Stufe der Kern in eine in einem Winkel von 3 bis 10°, vorzugsweise von 4 bis 6°, zur Horizontale ausgerichtete Umgießungsform eingebracht und dort positioniert wird,
- dass in einer dritten Stufe bei geschlossener Polymergemisch-Zufuhröffnung durch Anschluss der Abführungsöffnung an eine Unterdruck- bzw. Vakuumpumpe zumindest ein Teil der im Holz des Kerns bzw. in dessen Poren ursprünglich enthaltenen Luft bzw. Gase abgesaugt wird,
- dass in einer vierten Stufe die Polymerschmelze in die Umgießungsform eingebracht und dort aushärten gelassen wird und
- dass in einer fünften Stufe der polymer-ummantelte Kern ausgeformt wird.

7. Verfahren nach Anspruch 6, **dadurch gekennzeichnet, dass** als Umgießungsform eine zumindest zweiteilige Form aus Epoxy-Harz, bevorzugt mit innenseitiger Trennmittel-Beschichtung, eingesetzt wird.

8. Verfahren nach Anspruch 6 oder 7, **dadurch gekennzeichnet, dass** in der zweiten Stufe - bevorzugt für einen Zeitraum von 1 bis 5 min, insbesondere von 2 bis 3 min - der Innenraum der Gießform auf einen Unterdruck von 0,7 bis 0,9 bar, bevorzugt auf etwa 0,8 bar, evakuiert wird.

## Claims

1. Closure for a building opening and/or its frame, particularly door leaf, leaf of a window, flap, door and window leaf frame, window and door louver, window sill and/or case frame for doors and windows, comprising a, particularly profiled, core formed of wood, laminated wood or wood material, and a cover layer, which surrounds it, wherein air or gases originally contained in said wood or wood material of said core or in its pores is or are at least partially extracted from it, and the moisture contents of it is reduced to a value of below 10 %, and the core is encased with a cover coating (3), which is bound to it, while engaging its surface (21) in a close fitting manner, and which is formed by casting round it with a free-flowing polymer (30, 30', 3) in a cast around mould, which corresponds to its cross-sectional or profile shape, the polymer curing in said mould, **characterised in**
- **that** in case the contents of the wood (H) in hydrophobic oil is below 2 % by weight, the wood is impregnated, preferably saturated, from its surface (21) with a hydrophobic oil of biogenic origin at a proportion of at least 2 up to 5 % by weight in maximum, each with respect to the quantity of wood, the cover coating being formed with a polyurethane resin, a polyester resin or an acrylic resin.

2. Closure and/or frame according to claim 1, **characterised in that** the wood (H) of the core (2) is impregnated with a plant or tree oil (Ö), particularly with teak oil.

3. Closure and/or frame according to claim 1 or 2, **characterised in that** the core (2) is formed of hard wood, particularly of teak and/or iroko wood.

4. Closure and/or frame according to any of claims 1 to 3, **characterised in that** the thickness of the polymer or artificial resin cover coating (3) of the core (2), which is preferably completely uniform, amounts to 3 to 7 mm, preferably 5 ± 0.5 mm.

5. Closure and/or frame according to any of claims 1 to 4, **characterised in that** the artificial resin cover coating (3) of the core (2), at its outside, is provided with a painting (301), preferably with a coat of lacquer.

6. Manufacturing process for a closure for a building opening and/or its frame according to any of claims 1 to 5, wherein the humidity of the wood material of the core is reduced, and the core, optionally after a finishing it to the final cross-sectional shape or profile and dimension provided, is positioned at an equal distance to all sides to the inner walls of an at least two-part cast around mould, which is shaped in its interior in correspondence to the desired cross-sectional shape or profile or dimension and comprises feeding opening at the lowermost location or at the lowermost location of its cover, which is connected or connectable to at least one feeding conduit for the melt of an initial polymer mixture, and a discharge opening at the uppermost location or at the uppermost location of its cover, which is connected or connectable to a discharge conduit, after which the polymer mixture or polymer component mixture, provided for the cover coating of the core, is introduced in upward direction through said polymer melt feeding opening into the cast around mould, and is allowed to cure, after which
finally, in a fifth step, the core cast around with said cover coating of cured polymer thus obtained is removed from the mould,
**characterised in**
- **that** in a first step, the wood, the laminated wood or the wood material of the core, by drying or by a vacuum treatment or the like, is brought to a content of moisture of 6 to 8 % by weight 5, after which, in case that the inherent oil contents of the wood is below 2 %, the core is impregnated with an oil up to a content of oil of 2 to 5 % by weight by depositing it in a warm bath of a wood impregnating oil of biogenic origin,
- **that** in a second step, the core is introduced into a cast around mould oriented under an angle of 3 to 10°, preferably of 4 to 6° to the horizontal, and is positioned there,
- **that** in a third step, at least part of the air or gases, initially contained in the wood of the core or in its pores, are sucked off, while the polymer mixture feeding opening is closed, by connecting said discharge opening to an negative pressure pump or a vacuum pump,
- **that** in a fourth step, polymer melt is introduced into said cast around mould and is there permitted to cure, and
- **that** in a fifth step, the polymer encased core is removed from the mould.

7. Process according to claim 6, **characterised in that** an at least bipartite mould of an epoxy resin is used as a cast around mould, preferably having a coating of a parting compound inside.

8. Process according to claim 6 or 7, **characterised in that** in said second step, preferably during a period of 1 to 5 min, particularly of 2 to 3 min, the inner space of said mould is evacuated to an underpressure of 0.7 to 0.9 bar, preferably of about 0.8 bar.

## Revendications

1. Fermeture pour une baie d'un bâtiment et/ou son encadrement, en particulier un vantail de porte, un vantail d'une croisée, un abattant, un encadrement d'un vantail de porte ou d'une croisée, contrevent d'une croisée ou de porte, un appui de fenêtre et/ou cadre rectangulaire pour une porte ou une fenêtre, qui comprend un coeur, particulièrement profilé, de bois, de bois composite ou d'un matériau de bois, et une couche extérieure, qui l'entoure, dans laquelle l'air ou les gazes initialement contenus dans le bois ou le matériau de bois du coeur est ou sont au moins partiellement extrait(s), et dont le taux d'humidité est réduit à un valeur au-dessous de 10%, et dont le coeur est enrobée d'une couche de revêtement (3) relié à ceci, qui est complètement affleurée à sa surface (21) et est formé en l'entourant dans une moule à entourer, qui correspond à sa section transversale ou à sa forme de profile, avec un polymère (30, 30', 3) coulant et durcissant dans le moule,
**caractérisé en ce,**
- **que**, si le teneur du bois (H) en huile hydrophobe est au-dessous de 2 % en poids, le bois est imprégné, préférablement imbibé, à partir de sa surface (21) d'une huile hydrophobe d'un origine biogène à une fraction d'au moins 2 à 5 % en poids en maximum, la couche de revêtement étant formée avec une résine de polyuréthane, de polyester ou acrylique.

2. Fermeture et/ou encadrement selon la revendication 1, **caractérisé en c e**, que le bois (H) du coeur (2) est imprégné d'une huile de plante ou d'arbre (Ö), en particulier d'une huile de teck.

3. Fermeture et/ou encadrement selon la revendication 1 ou 2, **caractérisé en ce, que** le coeur (2) est formé avec d'un bois dure, particulièrement avec de bois de teck et/ou de bois d'azobé.

4. Fermeture et/ou encadrement selon une quelconque des revendications 1 à 3, **caractérisé en ce, que** l'épaisseur de la couche de revêtement (3) en polymère ou d'une résine artificielle du coeur (2), qui est préférablement complètement uniforme, se monte à 3 à 7 mm, de préférence 5 ± 0,5 mm.

5. Fermeture et/ou encadrement selon une quelconque des revendications 1 à 4, **caractérisé en ce, que** la couche de revêtement (3) du coeur (2) est pourvue à sa surface extérieure d'une peinture (301), de préférence d'un enduit de laque.

6. Procédé de fabrication d'une fermeture pour une baie d'un bâtiment et/ou son encadrement selon une quelconque des revendications 1 à 5, dans lequel l'humidité du matériau de bois du coeur est réduite, dans lequel le coeur, le cas échéant après un finissage à la forme prévue respectivement en coupe transversal ou à la forme ou dimension en profile, est positionné, de forme, qu'il est espacé également des surfaces de parois internes vers tous les côtés, dans un moule au moins bipartite à entourer, , qui est façonné à l'intérieur en correspondance avec la forme désirée en coupe transversal ou à la forme ou dimension en profile finales, et comprend au lieu inférieur, ou au lieu inférieur de son couvercle, un orifice d'admission connecté ou connectable à au moins un conduit d'admission de la fonte d'un mélange de polymère initial, et au lieu supérieur, ou au lieu supérieur de son couvercle, un orifice de décharge connecté ou connectable à un conduit de décharge, après quoi le mélange de polymère ou des composants de polymère, prévu pour la couche de revêtement au coeur, est introduit en montée dans le moule à entourer à travers l'orifice d'admission de la fonte de polymère, et est permis à durcir, après quoi,
finalement, dans une cinquième étape, on extrait le coeur enrobé par la couche de revêtement du polymère durci, qui est ainsi obtenu,
**caractérisé en ce,**
- **que**, dans une première étape, le bois, le bois composite ou un matériau de bois du coeur est amené à un taux d'humidité de 6 à 8 % en poids par un séchage, ou par un traitement à vide ou pareil, après quoi, en cas que le teneur propre en huile du bois est au dessous de 2 %, le coeur est imprégné avec de l'huile jusqu'à un teneur en huile de 2 à 5 % en poids par une mise en dépôt dans un bain chaud d'un huile d'imprégnation de bois d'origine biogène,
- **que**, dans une deuxième étape, le coeur est introduit dans un moule à entourer orienté sous un angle de 3 à 10°, préférablement de 4 à 6° par rapport à la horizontale, et y est positionné,
- **que**, dans une troisième étape, on aspire au moins une partie de l'air ou des gazes initialement contenus dans le bois du coeur ou dans les pores de ceci, tout en fermant l'orifice d'admission du mélange de polymère, par une connexion de l'orifice de décharge à une pompe à dépression ou à vide,
- **que**, dans une quatrième étape, la fonte de polymère est introduite dans le moule à entourer, et y est permis à durcir, et
- **que**, dans une cinquième étape, on extrait le coeur enrobé par le polymère.

7. Procédé selon la revendication 6, **caractérisé en ce, que** l'on utilise un moule d'au moins deux parts d'une résine époxy comme le moule à entourer, ayant de préférence une couche d'un agent de démoulage au côté intérieur.

8. Procédé selon la revendication 6 ou 7, **caractérisé en ce, que** l'espace intérieur du moule, dans la deuxième étape, est évacué à un vide de 0,7 à 0,9 bar, de préférence à environ 0,8 bar, préférablement pendant une période de 1 à 5 min, particulièrement de 2 à 3 min.
